# EUROPÄISCHE PATENTANMELDUNG

(11) **EP 1 544 576 A1**
(43) Veröffentlichungstag der Anmeldung: **22.06.2005**
(21) Anmeldenummer: 03029071.2
(22) Anmeldetag: 17.12.2003
(51) Int. Cl.: G01C 21/36

(54) **Kraftfahrzeug-Navigationsvorrichtung mit verbesserter Information für den Fahrer**

(71) Anmelder: Grundig Car InterMedia System GmbH, 90471 Nürnberg (DE)
(72) Erfinder: Kurrer, Dietmar, 90469 Nürnberg (DE); Wentzel, Paul, 91052 Erlangen (DE); Ruschkowski, Jürgen, 90419 Nürnberg (DE)
(74) Vertreter: Manitz, Finsterwald & Partner

(57) **Zusammenfassung**

Die Erfindung betrifft eine Kraftfahrzeug-Navigationsvorrichtung. Diese weist einen Landkartenspeicher auf, in welchem für mehrere Länder Landkartendaten abgespeichert sind. Weiterhin sind im Landkartenspeicher Daten hinterlegt, die Verkehrsregeln und Verkehrsbestimmungen in den genannten Ländern entsprechen. Der Benutzer hat die Möglichkeit, gezielt auf die den Verkehrsregeln und Verkehrsbestimmungen entsprechenden Daten eines gewünschten Landes zuzugreifen. Weiterhin werden ihm diese Daten auf seiner Reise zu einem in einem Nachbarland gelegenen Zielort präsentiert, insbesondere bei der Überquerung der Landesgrenze.

## Beschreibung

Die Erfindung betrifft eine Kraftfahrzeug-Navigationsvorrichtung.

Bekannte Kraftfahrzeug-Navigationsvorrichtungen weisen einen Navigationsrechner, einen Speicher für Landkartendaten und ein Display zur Anzeige von Navigationsdaten auf. Weiterhin sind sie mit einer Bedientastatur versehen, mittels welcher das Fahrtziel in Form von alphanumerischen Zieldaten eingegeben werden kann. Navigationsdaten können auch akustisch über Lautsprecher wiedergegeben werden.

Aus der DE 34 45 668 C1 ist eine Steuervorrichtung für ein Fahrzeug-Zielführungssystem bekannt. Dabei erfolgt eine Eingabe des Fahrtzieles mittels eines transportablen Handgerätes, welches Eingabetasten, ein Display, einen Rechner und einen Straßenkartenspeicherchip aufweist. Mittels dieses Handgerätes können Daten fahrzeugunabhängig eingegeben werden. Zu Fahrtbeginn wird das Handgerät in eine Aussparung des Armaturenbrettes des Fahrzeugs eingesetzt.

Aus der EP 1 080 975 A2 sind ein Verfahren und eine Vorrichtung zur Darstellung von fahrer- oder fahrtrelevanten Informationen bekannt. Diese Darstellung erfolgt auf einem Display derart, dass die Gesamtlebensdauer einer Komponente oder der Gesamtinhalt einer Betriebsflüssigkeit oder die Gesamtheit eines Serviceintervalls oder die Gesamtlänge einer Route als graphisches Element bestimmter Länge dargestellt wird. Weiterhin wird an demselben graphischen Element die aktuelle abgelaufene Zeit oder die verlorene oder enthaltene Flüssigkeit oder die verbleibende Zeit bis zur nächsten Inspektion oder die zurückgelegte oder noch verbleibende Fahrtstrecke veranschaulicht.

Aus der DE 100 59 746 A1 ist ein computerunterstütztes Reiseroutenplanungs- und Reiseroutenführungssystem bekannt, welches dynamische Veränderungen sowohl der Verkehrssituation als auch Änderungen von Terminen des Fahrers berücksichtigt. Dieses bekannte System weist auch einen personalisierten Info-Push-Dienst auf. Dabei gibt der Benutzer ein persönliches Interessenprofil ein. Während der Fahrt zum Zielort gibt das bekannte System dem Fahrer automatisch und zeitgerecht Hinweise auf dem persönlichen Interessenprofil entsprechende Objekte, die entlang der Fahrtroute liegen.

Aus der DE 197 39 538 A1 ist eine Navigationsvorrichtung bekannt, bei der ein Zielort eingegeben wird, eine Wegsuche für einen zu dem Zielort führenden Weg erfolgt und der Führungsweg auf einem Anzeigeschirm angezeigt wird. Bei dieser bekannten Vorrichtung ist eine Kartendaten-Speichereinrichtung zum Speichern von Inlands-Kartendaten sowie Kartendaten von Straßen eines Nachbarlandes innerhalb einer vorbestimmten Zone benachbart zu einer Grenze vorgesehen. Weiterhin enthält die bekannte Navigationsvorrichtung eine Führungsweg-Sucheinrichtung zum Suchen eines Führungswegs, über den der Zielort auf Straßen erreicht wird, die Straßen des Nachbarlandes umfassen, wenn die Suche eines Führungswegs veranlasst wird. Der Benutzer hat die Möglichkeit festzulegen, ob der Zielort ausschließlich über Inlandsstraßen oder auch über Straßen im Nachbarland erreicht werden kann.

Der Erfindung liegt die Aufgabe zugrunde, eine Kraftfahrzeug-Navigationsvorrichtung mit verbesserter Information für den Fahrer anzugeben.

Diese Aufgabe wird durch eine Kraftfahrzeug-Navigationsvorrichtung mit den im Anspruch 1 angegebenen Merkmalen gelöst. Vorteilhafte Ausgestaltungen und Weiterbildungen der Erfindung sind in den abhängigen Ansprüchen 2 - 11 angegeben.

Die Vorteile der Erfindung bestehen insbesondere darin, dass dem Fahrer eines Kraftfahrzeugs innerhalb des Kraftfahrzeugs Informationen über in Nachbarländern geltende Verkehrsregeln und Verkehrsbestimmungen zur Verfügung stehen. Er kann sich diese Informationen unter Verwendung eines Bedienteiles gezielt abrufen und sich auf diese Weise schnell und einfach einen Überblick über in einem bestimmten Nachbarland gültige Verkehrsregeln und Verkehrsbestimmungen informieren. Dies ist insbesondere zu Beginn einer Dienstreise in ein Nachbarland und zu Beginn einer Urlaubsreise in ein Nachbarland von Vorteil.

Vorzugsweise wird - um dem Fahrer die Auswahl eines gewünschten Landes zu erleichtern - eine Menüseite mit einer Länderliste auf dem Display der Navigationsvorrichtung dargestellt. Der Fahrer hat die Möglichkeit, mittels der Cursorsteuertasten des Bedienteils in der Länderliste ein gewünschtes Land auszuwählen. Nach Bestätigung der Auswahl erfolgt die Wiedergabe der dem ausgewählten Land zugehörigen Verkehrsregeln und ggf. auch der dem ausgewählten Land zugehörigen Verkehrsbestimmungen.

Eine vorteilhafte Ausgestaltung der Erfindung besteht darin, dass dem Fahrer in einem Nachbarland gültige Verkehrsregeln und Verkehrsbestimmungen automatisch präsentiert werden. Diese automatische Wiedergabe kann dann vorgenommen werden, wenn der Prozessor der Navigationsvorrichtung nach einer erfolgten Routenberechnung erkennt, dass die Fahrt in oder durch das Nachbarland geht. Sie kann dann sofort nach dem Ende der Routenberechnung vorgenommen werden. Sie kann alternativ oder zusätzlich dazu unmittelbar nach dem Fahrtantritt bzw. unmittelbar nach dem Anlassen des Motors erfolgen. Weiterhin kann eine automatische Wiedergabe dann vorgenommen werden, wenn der Prozessor anhand der vom GPS-Empfangsteil zur Verfügung gestellten Positionsdaten erkennt, dass das Fahrzeug die Landesgrenze zum Nachbarland überquert.

Weitere vorteilhafte Eigenschaften der Erfindung ergeben sich aus der nachfolgenden Erläuterung eines Ausführungsbeispiels anhand der Figuren.

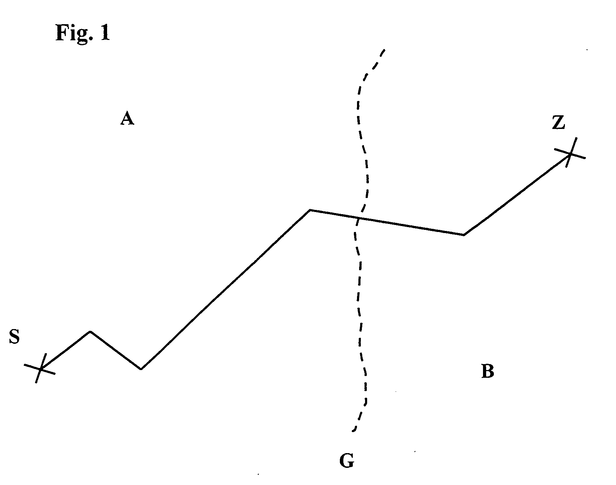

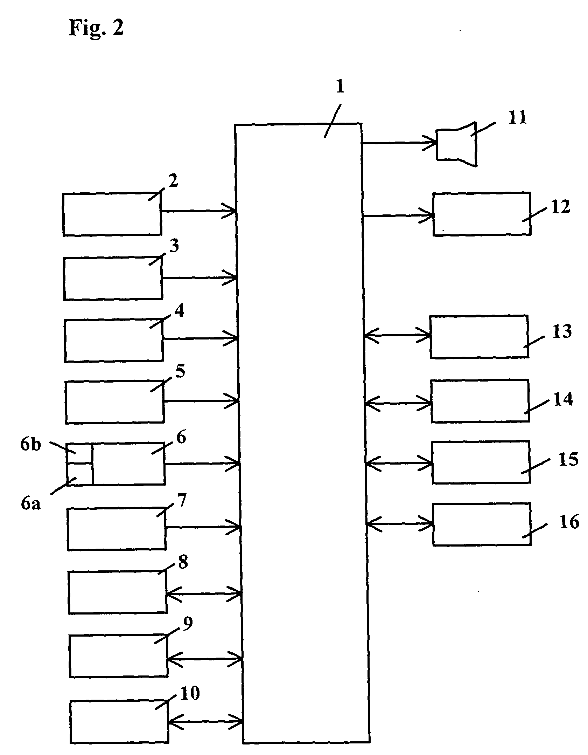

Die Figur 1 zeigt eine Skizze zur Veranschaulichung eines Navigationsvorganges von einem Startpunkt S zu einem Zielpunkt Z. Die Figur 2 zeigt ein Blockschaltbild einer Kraftfahrzeug-Navigationsvorrichtung, die im Zusammenhang mit der Erfindung verwendbar ist.

In der Figur 1 ist gezeigt, dass sich das Kraftfahrzeug, in welchem eine Navigationsvorrichtung gemäß der Erfindung angeordnet ist, am Startpunkt S befindet. Der Startpunkt S, beispielsweise der Stadtrand einer Kleinstadt, liegt in einem Land A. In diesem Land A haben bestimmte Verkehrsregeln Gültigkeit. Dazu gehören beispielsweise eine Höchstgeschwindigkeit innerhalb geschlossener Ortschaften von 50 km/h, eine Höchstgeschwindigkeit auf Landstraßen von 100 km/h und keine Geschwindigkeitsbeschränkungen auf Autobahnen. Weiterhin haben im Land A bestimmte Verkehrsbestimmungen Gültigkeit. Zu diesen Verkehrsbestimmungen gehört beispielsweise der Umstand, dass im Land A keine Autobahngebühren erhoben werden.

Ausgehend vom Startpunkt S soll das Kraftfahrzeug zum Zielort Z fahren, der sich im Nachbarland B befindet. In diesem Land B haben bestimmte, zumindest teilweise andere Verkehrsregeln Gültigkeit. Zu den Verkehrsregeln im Land B gehören beispielsweise eine Höchstgeschwindigkeit innerhalb geschlossener Ortschaften von 50 km/h, eine Höchstgeschwindigkeit auf Landstraßen von 100 km/h und eine Höchstgeschwindigkeit auf Autobahnen von 130 km/h. Weiterhin haben im Land B bestimmte, zumindest teilweise andere Verkehrsbestimmungen Gültigkeit. Zu diesen Verkehrsbestimmungen gehört beispielsweise der Umstand, dass im Land B Autobahngebühren erhoben werden, die durch den Kauf eines Aufklebers für die Windschutzscheibe an der Grenze oder in grenznahen Tankstellen entrichtet werden können.

Gemäß einer ersten Ausführungsform der Erfindung hat der Fahrer die Möglichkeit, unter Verwendung des Bedienteils der Navigationsvorrichtung das Nachbarland B auszuwählen. Als Folge davon erfolgt in akustischer Form über den oder die Lautsprecher des Kraftfahrzeugs und/oder in visueller Form auf dem Display des Navigationssystems eine Wiedergabe im ausgewählten Land B gültiger Verkehrsregeln. Vorzugsweise werden zusätzlich zu den im Land B gültigen Verkehrsregeln auch die im Land B gültigen Verkehrsbestimmungen akustisch oder visuell wiedergegeben. Bei dieser ersten Ausführungsform der Erfindung erfolgt die Wiedergabe nach Eingabe eines Bedienbefehls durch den Fahrer bzw. Benutzer und unabhängig davon, ob ein Navigationsvorgang aktiv ist oder nicht.

Gemäß einer zweiten Ausführungsform der Erfindung erfolgt die Wiedergabe der einem Land zugeordneten Verkehrsregeln automatisch. Dabei ist Voraussetzung, dass ein Fahrtziel eingegeben wurde und der Prozessor der Navigationsvorrichtung eine Fahrtroute zum Zielort berechnet hat. Erkennt der Prozessor, dass die ermittelte Fahrtroute in ein Nachbarland hineinreicht oder dieses durchquert, dann gibt er die automatische Wiedergabe der im Nachbarland gültigen Verkehrsregeln frei. Diese automatische Wiedergabe kann unmittelbar nach der Ermittlung der Fahrtroute erfolgen. Zusätzlich oder alternativ dazu kann die automatische Wiedergabe auch unmittelbar nach dem Fahrtantritt bzw. nach dem Starten des Fahrzeugmotors erfolgen. Weiterhin kann die automatische Wiedergabe auch erst beim Grenzübertritt erfolgen, der anhand der Ausgangssignale des GPS-Empfangsteils der Navigationsvorrichtung detektiert wird.

Beide vorgenannten Ausführungsformen der Erfindung sind mittels der in der Figur 2 in Form eines Blockschaltbildes dargestellten Kraftfahrzeug-Navigationsvorrichtung realisierbar.

Die in der Figur 2 dargestellte Vorrichtung weist als zentrale Steuer- und Recheneinheit einen Mikroprozessor 1 auf, dessen Arbeitsprogramm in einem nichtflüchtigen Speicher 13 hinterlegt ist. Der Mikroprozessor 1 dient beim gezeigten Ausführungsbeispiel unter anderem als Navigationsrechner, der aus ihm zugeführten Signalen Navigationsdaten ermittelt und dem Fahrer des Kraftfahrzeugs in akustischer Form über einen Lautsprecher 11 und/oder in visueller Form über ein Display 12 zur Verfügung stellt.

Die Eingabe des Fahrtzieles erfolgt unter Verwendung einer Eingabeeinheit, bei der es sich um ein Bedienteil 8, ein Telefon 9 oder einen PDA 10 handeln kann. Bezüglich des Fahrtziels wird beispielsweise in alphanumerischer Form die Straße, die Hausnummer, die Postleitzahl, der Name des Zielortes und das Land des Zielortes eingegeben.

Weiterhin ist der Prozessor 1 mit einem GPS-Empfangsteil 3 verbunden, welches dem Prozessor Positionsdaten übermittelt, die der gegenwärtigen Position des Fahrzeugs entsprechen. Aus diesen Positionsdaten, dem eingegebenen Fahrtziel und Landkartendaten, die in einem Landkartenspeicher 6 abgespeichert sind, ermittelt der Prozessor 1 die Navigations- bzw. Fahrtroutendaten, die dem Fahrer auf der Fahrt zu seinem Zielort in akustischer und visueller Form übermittelt werden. Diese Fahrtroutendaten werden in einem Speicher 15 zwischengespeichert und während der Fahrt bei Bedarf aktualisiert.

Die akustische Wiedergabe von Fahrtroutendaten erfolgt unter Verwendung von Sprachbausteinen, die bereits werkseitig in einem Speicher 14 hinterlegt wurden. Die visuelle Wiedergabe der Fahrtroutendaten erfolgt auf dem Display 12.

Ferner ist der Mikroprozessor 1 mit einem Rundfunkempfangsteil 2, einer Servicezentrale 4, einer Uhr 5 und einer Fahrtdatenquelle 7 verbunden.

Mittels des Rundfunkempfangsteil 2 werden Verkehrsnachrichten empfangen und an den Mikroprozessor 1 weitergeleitet. Dieser sorgt bei Bedarf für eine Unterbrechung des laufenden Programmes, beispielsweise einer Musikwiedergabe von einem Kassettenteil oder einem CD-Abspielteil, und eine verzögerungsfreie Wiedergabe der jeweiligen Verkehrsnachricht über den Lautsprecher 11. Weiterhin berücksichtigt der Mikroprozessor 1 die Verkehrsnachrichten bei der Planung der Restroute bis zum Fahrtziel und ändert ggf. die bisher gültigen Routendaten ab, um beispielsweise einen gemeldeten Verkehrsstau zu umfahren.

Die von der Uhr 5 abgeleitete Echtzeitinformation wird vom Mikroprozessor 1 verwendet, um die voraussichtliche Fahrtzeit bis zum Fahrtziel und die voraussichtliche Ankunftszeit am Fahrtziel zu ermitteln

Die Fahrtdatenquelle 7 stellt dem Mikroprozessor 1 beispielsweise über den CAN-Bus des Fahrzeugs Informationen über die Betriebsparameter des Fahrzeugs zur Verfügung. Zu diesen Betriebsparametern gehören Angaben des momentanen Tankfüllungsstandes, der momentanen Fahrtgeschwindigkeit und der Motortemperatur. Der Mikroprozessor 1 verwendet diese Daten beispielsweise dazu, den Fahrer über den Lautsprecher 11 auf einen nötigen Tankstopp hinzuweisen oder den Fahrer über den Lautsprecher 11 bei zu hoher Motortemperatur dazu aufzufordern, langsamer zu fahren, so dass die Motortemperatur wieder absinken kann.

Weiterhin erhält der Mikroprozessor 1 von der Servicezentrale 18 automatisch Informationen übermittelt, die vom Fahrer abonniert wurden. Bei diesen Informationen handelt es sich beispielsweise um Wetterberichte und Veranstaltungshinweise aus Städten, die entlang der geplanten Fahrtroute liegen, unter anderem auch um den Wetterbericht und Veranstaltungshinweise für den Zielort. Auch diese Informationen können vom Mikroprozessor 1 beim Navigationsvorgang berücksichtigt werden.

Die über das Rundfunkempfangsteil 2 empfangenen Verkehrsnachrichten, die die vorgesehene Fahrtroute betreffen, werden auch bei abgestelltem Motor bzw. ausgeschaltetem Rundfunkempfangsteil 2 in einem Verkehrsnachrichtenspeicher 16 abgespeichert. Die dort hinterlegten Verkehrsnachrichten können vom Fahrer des Fahrzeugs bei Bedarf mittels der Bedieneinheit 8 abgerufen werden. Dies ist insbesondere von Vorteil nach einer Fahrtunterbrechung, während derer der Fahrer sich vorübergehend außerhalb des Fahrzeugs aufgehalten hat.

Die im Landkartenspeicher 6 abgespeicherten Landkartendaten enthalten in vorteilhafter Weise nicht nur Landkartendaten des Landes, in dem sich das Kraftfahrzeug bzw. die Navigationsvorrichtung größtenteils befindet, sondern auch Landkartendaten mindestens eines Nachbarlandes. Vorzugsweise sind im Landkartenspeicher Landkartendaten abgespeichert, die sich auf alle Länder Mitteleuropas oder gar auf alle europäischen Länder erstrecken. Dadurch hat der Fahrer die Möglichkeit, sich unter Verwendung nur eines einzigen Landkartenspeichers, bei dem es sich vorzugsweise um eine CD-ROM, eine DVD oder eine in das Navigationsgerät integrierte Festplatte handelt, Routendaten von der Navigationsvorrichtung ermitteln zu lassen, die auch Fahrten ins Ausland oder Fahrten betreffen, die teilweise durch ein Nachbarland führen.

Der Landkartenspeicher 6 weist einen Speicherbereich 6a auf, in welchem für alle Länder, für die im Landkartenspeicher 6 Landkartendaten abgespeichert sind, auch Daten über im jeweiligen Land gültige Verkehrsregeln abgespeichert sind. Dazu gehören beispielsweise eine Angabe über die erlaubte Höchstgeschwindigkeit innerhalb geschlossener Ortschaften, auf Landstraßen und auf Autobahnen. Weiterhin sind gemäß einer vorteilhaften Weiterbildung der Erfindung im Speicherbereich 6a auch Informationen über in den einzelnen Ländern gültige Verkehrsbestimmungen abgespeichert. Dazu gehören beispielsweise Angaben über Autobahngebühren und mautpflichtige Straßen.

Die im Speicherbereich 6a abgespeicherten Daten bezüglich eines gewünschten Landes werden dem Fahrer des Kraftfahrzeugs entweder als Folge eines Aufrufes unter Verwendung der Bedieneinheit oder automatisch präsentiert.

Zum Aufruf der einem bestimmten Land zugeordneten Verkehrsregeln und Verkehrsbestimmungen betätigt der Fahrer eine Menütaste des Bedienteils 8. Als Folge der Betätigung der Menütaste wird auf dem Display 12 eine Menüseite angezeigt. Diese enthält eine Liste, in welcher alle Länder aufgelistet sind, bezüglich derer Verkehrsregeln und Verkehrsbestimmungen im Speicherbereich 6a abgespeichert sind. Der Fahrer wählt mittels der Cursorsteuertasten des Bedienteils 8 in der Liste ein gewünschtes Land an und bestätigt diese Anwahl durch Betätigung einer Bestätigungs- bzw. Entertaste. Dies hat zur Folge, dass dem Fahrer die dem gewünschten Land zugehörigen Verkehrsregeln und Verkehrsbestimmungen in akustischer Form über den Lautsprecher 11 und/oder in visueller Form auf dem Display 12 präsentiert werden. Bei der Wiedergabe über die Lautsprecher 11 werden Sprachbausteine verwendet, die im Speicher 14 bereits werkseitig abgespeichert wurden.

Auf diese Weise hat der Fahrer eines Kraftfahrzeugs die Möglichkeit, sich gezielt, schnell und einfach Informationen über die in einem gewünschten Land gültigen Verkehrsregeln und Verkehrsbestimmungen zu verschaffen. Dies kann insbesondere auch unabhängig von einem Navigationsvorgang geschehen. Handelt es sich bei der Navigationsvorrichtung um eine tragbare, aus dem Kraftfahrzeug herausnehmbare Vorrichtung, dann kann sich der Fahrer oder eine andere Person die genannten Informationen auch außerhalb des Kraftfahrzeugs verschaffen.

Eine automatische Wiedergabe der in einem Nachbarland gültigen Verkehrsregeln und Verkehrsbestimmungen erfolgt stets im Zusammenhang mit einem Navigationsvorgang. Hat der Fahrer als Zielort einer bevorstehenden Reise eine in einem Nachbarland liegende Stadt angegeben, dann gibt der Prozessor 1 nach erfolgter Routenberechnung eine automatische Wiedergabe der genannten Verkehrsregeln und Verkehrsbestimmungen über den Lautsprecher 11 und/oder das Display 12 frei. Diese automatische Wiedergabe erfolgt vorzugsweise unmittelbar nach erfolgter Routenberechnung und/oder unmittelbar nach dem Beginn der Fahrt zum Zielort. Sie kann auch automatisch wiederholt werden, wenn nach einer Fahrtunterbrechung der Motor des Kraftfahrzeugs wieder angelassen wird. Sie kann auch erst dann vorgenommen werden, wenn das Kraftfahrzeug die Grenze zum Nachbarland überquert. Letzteres wird vom Prozessor 1 anhand der Positionsdaten erkannt, die vom GPS-Empfangsteil 3 zur Verfügung gestellt werden.

Nach alledem beschreibt die Erfindung ein Kraftfahrzeug-Navigationssystem, in dessen Landkartenspeicher 6 Landkartendaten für mehrere Länder sowie Verkehrsregeln und Verkehrsbestimmungen in diesen Ländern entsprechende Daten abgespeichert sind. Der Fahrer kann auf die den Verkehrsregeln und Verkehrsbestimmungen eines bestimmten Landes entsprechenden Daten mittels der Bedieneinheit des Navigationssystems gezielt zugreifen. Weiterhin werden dem Fahrer die in einem Nachbarland gültigen Verkehrsregeln und Verkehrsbestimmungen automatisch präsentiert, wenn der Prozessor des Navigationssystems anhand der von ihm berechneten Routendaten erkennt, dass die bevorstehende Fahrt in das Nachbarland hineingeht. Die automatische Präsentation der den Verkehrsregeln und Verkehrsbestimmungen entsprechenden Daten kann unmittelbar nach Abschluss der Routenberechnung, unmittelbar nach dem Antritt der Fahrt, nach jedem Wiederanlassen des Motors und/oder beim Überqueren der Landesgrenze erfolgen.

Gemäß einer vorteilhaften Weiterbildung der Erfindung weist der Landkartenspeicher 6 einen weiteren Speicherbereich 6b auf, in welchem bezüglich der einzelnen Länder weitere landesspezifische Informationen abgespeichert sind. Zu diesen weiteren landesüblichen Informationen gehören beispielsweise Notfall-Telefonnummern sowie ein Lexikon bezüglich der jeweiligen Landessprache, in welchem zumindest Kraftfahrzeuge betreffende Grundbegriffe sowie Grundbegriffe des täglichen Lebens enthalten sind. Diese weiteren landesspezifischen Informationen werden dem Fahrer des Kraftfahrzeugs nicht automatisch, sondern erst nach gezieltem Aufruf mittels der Bedieneinheit 8 präsentiert.

### Bezugszeichenliste:

- 1: Prozessor
- 2: Rundfunkempfangsteil
- 3: GPS-Empfangsteil
- 4: Servicezentrale
- 5: Uhr
- 6: Landkartenspeicher
- 6a: Speicherbereich für Verkehrsregeln und Verkehrsbestimmungen
- 6b: Speicherbereich für weitere landesspezifische Informationen
- 7: Fahrtdatenquelle
- 8: Bedienteil
- 9: Telefon
- 10: PDA
- 11: Lautsprecher
- 12: Display
- 13: Speicher für Arbeitsprogramm des Prozessors
- 14: Speicher für Sprachbausteine
- 15: Speicher für Navigationsdaten
- 16: Speicher für Verkehrsnachrichten

- A: Land, dem der Startpunkt angehört
- B: Land, dem der Zielpunkt angehört
- G: Grenze
- S: Startpunkt
- Z: Zielpunkt

## Patentansprüche

1. Kraftfahrzeug-Navigationsvorrichtung, welche aufweist:
- einen Prozessor (1),
- einen mit dem Prozessor (1) verbundenen GPS-Empfangsteil (3), welcher dem Prozessor (1) Positionsdaten bereitstellt,
- einen mit dem Prozessor (1) verbundenen Speicher (6), in welchem Landkartendaten gespeichert sind, die sich auf mindestens zwei benachbarte Länder beziehen, und
- eine Informationswiedergabeeinheit (11, 12), mittels welcher vom Prozessor unter Verwendung der Landkartendaten ermittelte Fahrtroutendaten wiedergebbar sind,
**dadurch gekennzeichnet, dass**
der Speicher (6) einen Speicherbereich (6a) aufweist, in welchem für jedes der Länder Verkehrsregeln entsprechende Daten abgespeichert sind, und die Informationswiedergabeeinheit (11, 12) zur Wiedergabe der einem Land zugehörigen Verkehrsregeln vorgesehen ist.

2. Kraftfahrzeug-Navigationsvorrichtung nach Anspruch 1,
**dadurch gekennzeichnet, dass**
im Speicherbereich (6a) weiterhin für jedes der Länder Daten abgespeichert sind, die Verkehrsbestimmungen entsprechen, und die Informationswiedergabeeinheit (11, 12) zur Wiedergabe der einem Land zugehörigen Verkehrsbestimmungen vorgesehen ist.

3. Kraftfahrzeug-Navigationsvorrichtung nach Anspruch 1 oder 2,
**dadurch gekennzeichnet, dass**
die Informationswiedergabeeinheit einen Lautsprecher (11) enthält.

4. Kraftfahrzeug-Navigationsvorrichtung nach einem der vorhergehenden Ansprüche,
**dadurch gekennzeichnet, dass**
die Informationswiedergabeeinheit ein Display (12) enthält.

5. Kraftfahrzeug-Navigationsvorrichtung nach einem der vorhergehenden Ansprüche,
**dadurch gekennzeichnet, dass**
sie ein Bedienteil (8) aufweist, mittels dessen der Benutzer die einem der Länder zugehörigen Verkehrsregeln abrufen kann.

6. Kraftfahrzeug-Navigationsvorrichtung nach Anspruch 5,
**dadurch gekennzeichnet, dass**
auf dem Display (12) eine Menüseite anzeigbar ist, auf welcher eine Liste mit den Namen der Länder enthalten ist, und mittels der Cursorsteuertasten des Bedienteils (8) ein gewünschtes Land anwählbar ist.

7. Kraftfahrzeug-Navigationsvorrichtung nach einem der vorhergehenden Ansprüche,
**dadurch gekennzeichnet, dass**
der Prozessor (1) in Abhängigkeit von berechneten Routendaten eine automatische Wiedergabe der einem Nachbarland zugehörigen Verkehrsregeln initiiert, wenn die berechneten Routendaten sich auf das Nachbarland erstrecken.

8. Kraftfahrzeug-Navigationsvorrichtung nach Anspruch 7,
**dadurch gekennzeichnet, dass**
der Prozessor (1) die automatische Wiedergabe der dem Nachbarland zugehörigen Verkehrsregeln unmittelbar nach erfolgter Routenberechnung initiiert.

9. Kraftfahrzeug-Navigationsvorrichtung nach Anspruch 7 oder 8,
**dadurch gekennzeichnet, dass**
der Prozessor (1) die automatische Wiedergabe der dem Nachbarland zugehörigen Verkehrsregeln unmittelbar nach Fahrtantritt initiiert.

10. Kraftfahrzeug-Navigationsvorrichtung nach einem der Ansprüche 7 - 9,
**dadurch gekennzeichnet, dass**
der Prozessor (1) die automatische Wiedergabe der dem Nachbarland zugehörigen Verkehrsregeln automatisch initiiert, wenn die vom GPS-Empfangsteil (3) erhaltenen Positionsdaten das Überschreiten der Landesgrenze zum Nachbarland signalisieren.

11. Kraftfahrzeug-Navigationsvorrichtung nach einem der vorhergehenden Ansprüche,
**dadurch gekennzeichnet, dass**
der Speicher (6) einen weiteren Speicherbereich (6b) aufweist, in welchem für jedes der Länder Daten abgespeichert sind, die weiteren landesspezifischen Informationen entsprechen.
